(19) Europäisches Patentamt / European Patent Office / Office européen des brevets

(11) **EP 2 853 970 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **13186677.4**

(22) Anmeldetag: **30.09.2013**

(51) Int Cl.:
*F02C 9/00* (2006.01)    *G01M 15/05* (2006.01)

(54) **Verfahren zum Durchführen einer Wartung eines Triebwerks**

Method for carrying out maintenance on an engine

Procédé de réalisation de la maintenance d'une turbine

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.04.2015 Patentblatt 2015/14**

(73) Patentinhaber: **MTU Aero Engines AG**
**80995 München (DE)**

(72) Erfinder:
• **Kuschke, Jonathan**
**80802 München (DE)**
• **Dr. Tsalavoutas, Anastasios**
**16122 Kaisariani**
**Athen (GR)**
• **Kando, André**
**85221 Dachau (DE)**

(56) Entgegenhaltungen:
EP-A1- 1 983 158    EP-A2- 1 160 712
EP-A2- 1 914 010    US-A1- 2005 096 832

• **SCHEPERS W ET AL: "OPTIMIERUNG DER ON-LINE- UND OFF-LINE-WAESCHE AN EINER 26-MW- GASTURBINE UNTER BESONDERER BERUECKSICHTIGUNG DER LEISTUNGSSTEIGERUNG", VGB KRAFTWERKSTECHNIK, VGB KRAFTWERKSTECHNIK GMBH. ESSEN, DE, Bd. 79, Nr. 3, 1. Januar 1999 (1999-01-01) , Seiten 46-54, XP000802562, ISSN: 0372-5715**
• **EMERSON Process management: "Gas Turbine Engine Performance", , 31. Januar 2005 (2005-01-31), XP055114505, Gefunden im Internet: URL:http://www2.emersonprocess.com/siteadmincenter/PM%20Asset%20Optimization%20Docum ents/ProductWhitePapers/amspm_wp_GasTurbin ePerf.pdf [gefunden am 2014-04-17]**

## Beschreibung

Die Erfindung betrifft ein Verfahren zum Durchführen einer Wartung eines Triebwerks sowie ein Triebwerkswartungssystem zur Verwendung in einem solchen Verfahren.

Wartungsmaßnahmen an Triebwerken von Flugzeugen, Hubschraubern und anderen Luftfahrzeugen werden gegenwärtig nicht oder nur im Rahmen teurer Einzeltests im Hinblick auf ihre Auswirkungen auf die Wirkungsgradänderung des Triebwerks analysiert. Alternativ wird die Effizienz einzelner Wartungsmaßnahmen aus Entwicklungstests meist abweichender Triebwerkstypen abgeschätzt. Diese Schätzwerte sind jedoch stark fehlerbehaftet und liegen zudem in der Regel lediglich dem Hersteller des betreffenden Triebwerks vor. Daher werden im Rahmen der Wartung und Reparatur von Triebwerken teilweise unnötige Wartungsmaßnahmen durchgeführt.

Aus der europäischen Patentanmeldung EP 1 914 010 A2 ist ein Verfahren zum Durchführen einer Wartung eines Triebwerks bekannt, bei welchem die Zusammensetzung verschiedener Waschrezepte (Waschprodukt und Waschzeiten) ermittelt und getestet wird, um eine abhängig von den vorliegenden Randbedingungen optimale Wartung durchführen zu können.

Aufgabe der vorliegenden Erfindung ist es, ein Verfahren zum Warten eines Triebwerks zu schaffen, welches eine bessere Planung des Wartungsumfangs und eine gezieltere Durchführung der Wartung ermöglicht. Eine weitere Aufgabe der Erfindung ist es, ein Triebwerkswartungssystem zur Verwendung in einem solchen Verfahren bereitzustellen.

Die Aufgaben werden erfindungsgemäß durch ein Verfahren mit den Merkmalen des Patentanspruchs 1 sowie durch ein Triebwerkswartungssystem gemäß Patentanspruch 9 gelöst. Vorteilhafte Ausgestaltungen mit zweckmäßigen Weiterbildungen der Erfindung sind in den Unteransprüchen angegeben, wobei vorteilhafte Ausgestaltungen des Verfahrens als vorteilhafte Ausgestaltungen des Triebwerkswartungssystems anzusehen sind.

Ein erster Aspekt der Erfindung betrifft ein Verfahren zum Durchführen einer Wartung eines Triebwerks. Erfindungsgemäß werden dabei zumindest die Schritte Bereitstellen eines Triebwerkswartungssystems, welches ein Datenbanksystem mit einer Datenbank und einer Datenbankmanagementeinrichtung umfasst, Bereitstellen wenigstens eines in der Datenbank gespeicherten ersten Leistungsparameters, der eine Triebwerksleistung vor einer Triebwerkswartung charakterisiert, Bereitstellen wenigstens eines in der Datenbank gespeicherten Wartungsparameters, der ein Ausmaß einer Wartungsmaßnahme an einem Triebwerk im Rahmen einer Triebwerkswartung charakterisiert, Bereitstellen wenigstens eines in der Datenbank gespeicherten zweiten Leistungsparameters, der die Triebwerksleistung nach der Triebwerkswartung charakterisiert, Ermitteln eines funktionalen Zusammenhangs zwischen unterschiedlichen Wartungsparametern und dem Anteil der unterschiedlichen Wartungsparameter an einem Unterschied zwischen dem ersten Leistungsparameter und dem zweiten Leistungsparameter mittels der Datenbankmanagementeinrichtung, wobei die Datenbank Daten aus vergangenen Wartungen von Triebwerken und Daten umfasst, die anhand des aktuell zu wartenden Triebwerks erhalten werden, und "On-Wing"- und/ oder Prüfstands-Daten enthalten, die vor Durchführung der Wartung am Triebwerk gemessen und zur Ermittlung des ersten Leistungsparameters verwendet werden, Daten, die den Wartungsumfang charakterisieren und zur Ermittlung der Wartungsparameter für jede Wartungsmaßnahme verwendet werden und Daten, die "On-Wing"- und/oder Prüfstands-Daten enthalten, die nach der Durchführung der Wartung am Triebwerks gemessen und zur Ermittlung des zweiten Leistungsparameter verwendet werden, Ermitteln der Auswirkungen einzelner Wartungsmaßnahmen auf den zu erwartenden Gesamteffekt auf die Triebwerksleistung anhand der Daten früherer Wartungen und der aktuell am Triebwerk ermittelten Daten mit Hilfe der Datenbankmanagementeinrichtung, Ausgeben des funktionalen Zusammenhangs mittels des Triebwerkswartungssystems und Durchführen der Wartung des Triebwerks unter Berücksichtigung des funktionalen Zusammenhangs durchgeführt.

Mit anderen Worten ist es erfindungsgemäß vorgesehen, dass die Effizienz und der Beitrag wenigstens einer bestimmten Wartungsmaßnahme bzw. des Umfangs einer bestimmten Wartungsmaßnahme auf die resultierende bzw. durch die jeweilige Wartungsmaßnahme erzielbare Leistungssteigerung des Triebwerks funktional ermittelt und bei der Planung und Durchführung der Art und des Umfangs der Triebwerkswartung berücksichtigt werden. Unter einer Wartung werden im Rahmen der vorliegenden Erfindung die Wartung, die Reparatur, der Austausch und/oder die Überholung einer, mehrerer oder aller Komponenten des betreffenden Triebwerks verstanden. Im Unterschied zum Stand der Technik ermöglicht das erfindungsgemäße Verfahren eine fundierte Beurteilung und Vorhersage der Auswirkung einer bestimmten Wartungsmaßnahme auf die Zunahme der Leistung des Triebwerks, so dass Art und Umfang der im Rahmen der Wartung möglichen Wartungsmaßnahmen optimal ausgewählt werden können, um eine bestimmte Zielvorgabe zuverlässig zu erreichen. Je nach Zielsetzung der Wartung können hierdurch die Wartungs- und Ersatzteilkosten gesenkt werden, da beispielsweise weniger Neu- und Ersatzteile benötigt werden und keine Rückeinlastungen wegen nicht erfolgreichen Abnahmetests des gewarteten Triebwerks auftreten. Ebenso ist es möglich, durch gezielte Auswahl von Art und Umfang der Wartungsmaßnahmen bessere Leistungswerte des Triebwerks und höhere Lebensdauern einzelner Triebwerkskomponenten zu erzielen. Alle auszuführenden Wartungsmaßnahmen definieren zusammen den gesamten Wartungsumfang des Triebwerks. Aus dem für jede Wartungsmaßnahme individuell ermittelten funktionalen Zusammenhang können zudem Vorhersagen für zukünftige Wartungen und für die Wirkung einzelner Wartungsmaßnahmen zum Erreichen bestimmter Leistungszielwerte abgeleitet werden.

In einer vorteilhaften Ausgestaltung der Erfindung ist vorgesehen, dass der erste Leistungsparameter und/oder der zweite Leistungsparameter mittels eines Überwachungssystems des Triebwerks und/oder mittels eines Leistungsprüfstands ermittelt und in der Datenbank gespeichert wird. Mit anderen Worten ist es erfindungsgemäß vorgesehen, dass wenigstens einer der Leistungsdaten vorteilhaft aus performance-relevanten "On-wing"-Daten aus einem in der Regel ohnehin vorhandenen Monitoring-System des Triebwerks zur Analyse der Triebwerksleistung bzw. Komponentenperformance vor und nach der Wartung ermittelt wird. Alternativ oder zusätzlich kann wenigstens einer der Leistungsparameter auch mittels eines Leistungsprüfstands ermittelt werden, beispielsweise im Fall eines bereits ausgebauten Triebwerks, zur Standardisierung der Messwerte und dergleichen.

Weitere Vorteile ergeben sich, wenn der erste Leistungsparameter und/oder der zweite Leistungsparameter unter Berücksichtigung wenigstens eines Parameters aus der Gruppe Höhe, Druck, Temperatur, Drehzahl, Brennstoffmassenstrom, Flugmachzahl, Luftmassenstrom, Wirkungsgrad, Kapazität, Ventilstellung, Leitschaufelwinkel, Spalthaltungsstellung und Schwingungen im Turbinenbereich des Triebwerks und/oder im Verdichter ermittelt werden. Hierdurch kann die zu verbessernde bzw. wiederherzustellende Leistung des zu wartenden Triebwerks besonders präzise unter Berücksichtigung seiner jeweiligen konstruktiven Ausgestaltung ermittelt werden. Vorzugsweise wird der erste und/oder zweite Leistungsparameter zumindest unter Berücksichtigung der Parameter "Drehzahlen einer Niederdruck- und Hochdruckverdichterwelle", "Treibstoffmassenstrom", "Treibstofftemperatur" und "Abgastemperatur, gemessen vor oder nach einer Niederdruckturbine (abhängig vom Triebwerkstyp)" ermittelt.

Weitere Vorteile ergeben sich dadurch, dass der wenigstens eine Wartungsparameter ein Ausmaß einer Änderung eines Merkmals eines Bauteils des Triebwerks durch die Wartungsmaßnahme charakterisiert und/oder ein Ausmaß einer Wiederherstellung eines Merkmals eines Bauteils des Triebwerks durch die Wartungsmaßnahme charakterisiert und/oder unter Berücksichtigung einer Zyklenzahl eines zu wartenden Bauteils des Triebwerks seit einer früheren Wartung des Triebwerks ermittelt wird. Mit anderen Worten ist es vorgesehen, dass der Wartungsparameter den Umfang einer Wartungsmaßnahme charakterisiert, die eine Änderung eines bestimmten Merkmals, beispielsweise die Änderung von Spitzenspalten, Oberflächenrauhigkeiten, Vorderkantenradien, Sehnenlängen und dergleichen betrifft. Alternativ oder zusätzlich kann der Wartungsparameter den Umfang einer Wartungsmaßnahme charakterisieren, die die Wiederherstellung eines bestimmten Merkmals betrifft. Beispielsweise kann der Wartungsparameter charakterisieren, dass 20 %, 30 %, 50 % oder mehr der vorhandenen Rotorschaufeln des Triebwerks poliert werden. Ebenso kann vorgesehen sein, dass der Wartungsparameter die seit einer früheren Wartung angefallene Zyklenzahl eines Treibwerksbauteils zur Zustandsbeschreibung des Triebwerks berücksichtigt. Hierdurch können die Art der durchzuführenden Wartungsmaßnahmen sowie ihr jeweiliger Umfang optimal in Abhängigkeit des zu wartenden Triebwerks geplant und bereits vor der Durchführung der Wartung im Hinblick auf ihre Auswirkungen auf die Triebwerksleistung beurteilt werden.

Weitere Vorteile ergeben sich, wenn der erste Leistungsparameter und/oder der zweite Leistungsparameter und/oder der Wartungsparameter als in der Datenbank gespeicherte Daten eines bereits gewarteten Triebwerks vorliegen und/oder am zu wartenden Triebwerk ermittelt und in der Datenbank gespeichert werden. Mit anderen Worten können zum Ermitteln des funktionalen Zusammenhangs bereits in der Datenbank vorhandene Parameter, das heißt "historische" Daten früherer Wartungen desselben und/oder anderer Triebwerke herangezogen und zur Ermittlung des Wartungsumfangs des konkret zu wartenden Triebwerks herangezogen werden. Alternativ oder zusätzlich können einzelne oder alle der genannten Parameter vor, während und/oder nach der Wartung unmittelbar anhand des zu wartenden bzw. gewarteten Triebwerks ermittelt werden. Hierdurch kann die Datenbasis für die Ermittlung des funktionalen Zusammenhangs gezielt eingestellt und gegebenenfalls um "historische" Daten früherer Wartungen erweitert werden.

In einer weiteren vorteilhaften Ausgestaltung der Erfindung ist vorgesehen, dass der erste Leistungsparameter und/oder der zweite Leistungsparameter und/oder der Wartungsparameter bezogen auf einen Typ und/oder ein Exemplar und/oder eine Stufe und/oder ein Stufencluster des Triebwerks bereitgestellt werden. Mit anderen Worten ist es vorgesehen, dass die Datenbasis für die Ermittlung des funktionalen Zusammenhangs spezifisch an einen Typ oder ein bestimmtes Exemplar des zu wartenden Triebwerks angepasst wird. Alternativ oder zusätzlich können die genannten Parameter geclustert bzw. auf eine bestimmte Stufe des Triebwerks bezogen sein, um die Ermittlung des funktionalen Zusammenhangs zu vereinfachen.

Weitere Vorteile ergeben sich, indem der funktionale Zusammenhang durch eine Ausgleichungsrechnung ermittelt wird. Dies stellt eine besonders einfache Möglichkeit dar, um für die genannten Parameter, die jeweils einem nicht exakt bekannten geometrischen, chemischen und/oder physikalischen Modell gehorchen, einen funktionalen Zusammenhang zu ermitteln. Beispielsweise kann mit Hilfe der Ausgleichungsrechnung ein linearer Zusammenhang zwischen einer Spaltänderung an einer Schaufel und der damit verbundenen Zunahme des Wirkungsgrads des Triebwerks ermittelt werden. Grundsätzlich kann der funktionale Zusammenhang für bestimmte Wartungsmaßnahmen aber auch deutlich komplexer ausfallen.

Weitere Vorteile ergeben sich, wenn der funktionale Zusammenhang für eine Vielzahl von Wartungsparametern ermittelt wird. Dies erlaubt eine besonders gute Beurteilung und Vorhersage des Beitrags der zugeordneten Wartungsmaßnahmen zum Gesamtergebnis der Wartung.

Ein zweiter Aspekt der Erfindung betrifft ein Triebwerkswartungssystem zur Verwendung in einem Verfahren gemäß dem ersten Erfindungsaspekt. Hierzu umfasst das Triebwerkswartungssystem zumindest ein Datenbanksystem mit einer Datenbank, welche ausgebildet ist, wenigstens einen ersten Leistungsparameter, der eine Triebwerksleistung vor einer Triebwerkswartung charakterisiert, wenigstens einen Wartungsparameter, der ein Ausmaß einer Wartungsmaßnahme an einem Triebwerk im Rahmen einer Triebwerksüberholung charakterisiert, und wenigstens einen zweiten Leistungsparameter, der die Triebwerksleistung nach der Triebwerkswartung charakterisiert, zu speichern. Weiterhin umfasst das Datenbanksystem eine Datenbankmanagementeinrichtung, welche ausgebildet ist, auf die Datenbank zuzugreifen und einen funktionalen Zusammenhang zwischen unterschiedlichen Wartungsparametern und dem Anteil der unterschiedlichen Wartungsparameter am Unterschied zwischen dem ersten Leistungsparameter und dem zweiten Leistungsparameter zu ermitteln, wobei die Datenbank Daten aus vergangenen Wartungen von Triebwerken und Daten umfasst, die anhand des aktuell zu wartenden Triebwerks erhalten werden, und "On-Wing"- und/ oder Prüfstands-Daten enthalten, die vor Durchführung der Wartung am Triebwerk gemessen und zur Ermittlung des ersten Leistungsparameters verwendet werden, Daten, die den Wartungsumfang charakterisieren und zur Ermittlung der Wartungsparameter für jede Wartungsmaßnahme verwendet werden und Daten, die "On-Wing"- und/oder Prüfstands-Daten enthalten, die nach der Durchführung der Wartung am Triebwerk gemessen und zur Ermittlung des zweiten Leistungsparameters verwendet werden und die Auswirkungen einzelner Wartungsmaßnahmen auf den zu erwartenden Gesamteffekt auf die Triebwerksleistung anhand der Daten früherer Wartungen und der aktuell am Triebwerk ermittelten Daten ermittelt werden. Darüber hinaus weist das Triebwerkswartungssystem eine Ausgabeeinrichtung zum Ausgeben des mittels der Datenbankmanagementeinrichtung ermittelten funktionalen Zusammenhangs zur Berücksichtigung bei der Wartung des Triebwerks auf.

Das erfindungsgemäße Triebwerkswartungssystem ermöglicht damit eine bessere Planung des Wartungsumfangs sowie eine optimale Durchführung der Wartung, da die Auswirkung einer bestimmten Wartungsmaßnahme auf die Leistung des zu wartenden Triebwerks bereits im Vorfeld der Wartung beurteilt und bei der Planung und Durchführung der Wartung entsprechend berücksichtigt werden kann. Weitere sich ergebende Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:

Fig. 1     einen schematischen Querschnitt durch ein Triebwerk, an welchem unterschiedliche Parameter zur Ermittlung eines ersten und eines zweiten Leistungsparameters gemessen werden;

Fig. 2     ein beispielhaftes, nicht erfindungsgemäßes Ablaufdiagramm zum Ermitteln eines funktionalen Zusammenhangs zwischen unterschiedlichen Wartungsparametern und ihrem jeweiligen Anteil an einem Unterschied zwischen einer Triebwerksleistung vor und nach einer Triebwerkswartung;

Fig. 3     ein alternatives Ablaufdiagramm zum Ermitteln eines funktionalen Zusammenhangs zwischen unterschiedlichen Wartungsparametern und ihrem jeweiligen Anteil an einem Unterschied zwischen einer Triebwerksleistung vor und nach einer Wartung;

Fig. 4     zeigt ein Diagramm, in welchem in Abhängigkeit einer Zyklenzahl eines Bauteils das Potenzial zweier Wartungsmaßnahmen zur Verbesserung einer Triebwerksleistung gezeigt ist; und

Fig. 5     ein Diagramm mit einem Vergleich zwischen gemessenen und anhand des ermittelten funktionalen Zusammenhangs errechneten Wirkungsgradänderungen gewarteter Triebwerke.

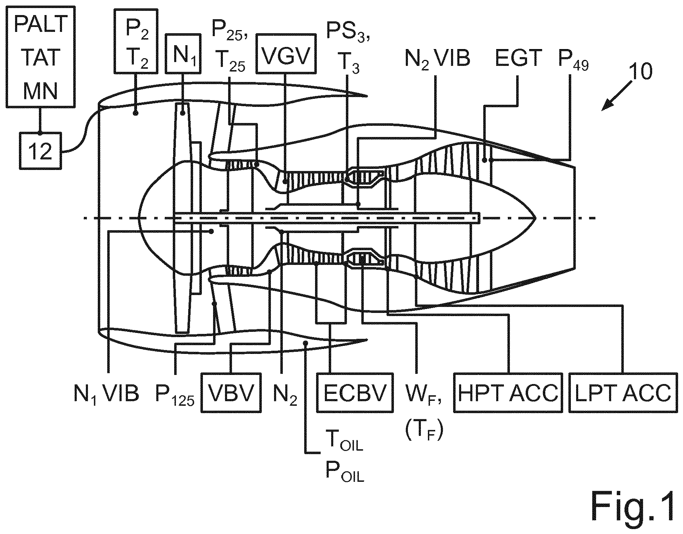

Fig. 1 zeigt einen schematischen Querschnitt durch ein an sich bekanntes Triebwerk 10 eines Flugzeugs, an welchem unterschiedliche Parameter zur Ermittlung eines ersten Leistungsparameters $Y_{pre}$ und eines zweiten Leis-tungsparameters $Y_{post}$ gemessen werden. Der erste Leistungsparameter $Y_{pre}$ charakterisiert dabei eine Triebwerksleis-tung vor einer Triebwerkswartung, während der zweite Leistungsparameter $Y_{post}$ eine Triebwerksleistung nach einer Triebwerkswartung charakterisiert. Diese Leistungsparameter $Y_{pre}$, $Y_{post}$, die auch als Performanceparameter bezeichnet werden können, können anhand von On-Wing Daten aus dem Betrieb des Triebwerks 10 bestimmt werden, die durch ein Überwachungssystem 12 (Monitoring Tool) des Triebwerks 10 während des Betriebs gesammelt wurden. Diese Daten enthalten performance-relevante Parameter wie Drücke, Temperaturen, Drehzahlen, Flugmachzahl, Brennstoffmassenstrom und dergleichen. Alternativ oder zusätzlich können Daten von einem Prüfstand verwendet werden, beispielsweise wenn das Triebwerk von einer Tragfläche eines Flugzeugs abmontiert oder aus einem Helikopter ausgebaut ist. Ein Abnahmetest nach der Wartung, im Rahmen dessen der zweite Leistungsparameters $Y_{post}$ ermittelt wird, ist obligatorisch, um den Wartungserfolg zu dokumentieren. Ein Testlauf vor der Wartung zur Ermittlung des ersten Leistungsparameters $Y_{pre}$ kann zum Zweck der Datengenerierung extra angesetzt werden, wenn die On-Wing Daten beispielsweise nicht vorliegen oder nicht ausreichend genau sind. Die aufgezeichneten Parameter sind dabei grund-

sätzlich dieselbe wie im On-Wing Fall. Lediglich der Luftmassenstrom des Triebwerks 10 wird anstelle der Flugmachzahl gemessen.

Je nach Typ und Ausstattung des Triebwerks 10 können unterschiedliche Parameter gemessen werden, um den ersten Leistungsparameter $Y_{pre}$ und den zweiten Leistungsparameter $Y_{post}$ zu ermitteln. Vorzugsweise werden dabei zumindest die Messwerte:

> N1, N2: Drehzahl der Niederdruck- bzw. Hochdruckverdichterwelle
> WF, TF: Treibstoffmassenstrom und Treibstofftemperatur
> EGT: Abgastemperatur, gemessen vor oder nach der Niederdruckturbine (abhängig vom Triebwerkstyp)

zur Ermittlung des ersten Leistungsparameters $Y_{pre}$ und des zweiten Leistungsparameters $Y_{post}$ herangezogen. Weiterhin können bei dem vorliegenden Triebwerk 10 die folgenden Parameter, einzeln und in beliebiger Kombination, gemessen werden, um den ersten Leistungsparameter $Y_{p-re}$ und den zweiten Leistungsparameter $Y_{post}$ noch exakter zu ermitteln:

> P2, T2: Druck und Temperatur im Triebwerkseinlauf (stromauf des Fans)
> P25, T25: Druck und Temperatur zwischen dem Niederdruckkompressor/-booster und dem Hochdruckkompressor
> PS3, T3: Statischer Druck und totale Temperatur zwischen dem Hochdruckverdichter und der Brennkammer
> P125: Druck stromab des Fans
> P49: Druck nach der Niederdruckturbine
> VBV: Stellung des variablen Entlüftungsventils (Variable Bleed Valve position)
> VGV: Stellung der variablen Leitschaufeln (Variable Guide Vanes position)
> ECBV: Stellung des variablen Ventils des Umgebungskontrollsystems (Environmental Control Bleed Valve position)
> HPT ACC, LPT ACC: Zustand des aktiven Spaltregelungssystems für die Hochdruck- und Niederdruckturbine (Active Clearance Control position for High Pressure Turbine and Low Pressure Turbine)
> N1 VIB, N2 VIB: Schwingungsmessung an der Niederdruck- und Hochdruckverdichterwelle Toil, Poil: Temperatur und Druck im Ölsystem des Triebwerks

Weitere Parameter, die das zum Triebwerk 10 gehörige Luftfahrzeug betreffen und grundsätzlich ebenfalls bei der Ermittlung berücksichtigt werden können, sind:

> PALT (Pressure altitude, Barometrische Höhenmessung)
> TAT (Total air temperature, Staupunkttemperatur der Umgebung)
> MN (Flight Mach Number, Flugmachzahl).

Im Fall einer "Off-Wing"-Messung auf einem Leistungsprüfstand wird anstelle der Flugmachzahl der Luftmassenstrom als Parameter verwendet. Vorzugsweise werden grundsätzlich zumindest im Rahmen einer bestimmten Wartung dieselben Parameter zur Ermittlung des ersten Leistungsparameters $Y_{pre}$ und des zweiten Leistungsparameters $Y_{post}$ herangezogen.

Im Rahmen einer Triebwerkswartung können grundsätzlich unterschiedliche Wartungs- und Reparaturmaßnahmen durchgeführt werden, die je nach Art und Umfang unterschiedlich stark zu einer Gesamtverbesserung der Triebwerksleistung, erkennbar durch einen Unterschied zwischen dem ersten Leistungsparameter $Y_{pre}$ und dem zweiten Leistungsparameter $Y_{post}$, beitragen. Der Unterschied zwischen dem ersten Leistungsparameter $Y_{pre}$ und dem zweiten Leistungsparameter $Y_{post}$ kann beispielsweise als Wirkungsgradänderung $\Delta\eta$ des Triebwerks aufgrund der vorgenommenen Wartungsmaßnahmen ausgedrückt werden. Um im Vorfeld der Wartung des Triebwerks 10 die vorzunehmenden Wartungsmaßnahmen bestimmen zu können, die beispielsweise erforderlich sind, um eine bestimmte Mindesttriebwerksleistung zu erreichen bzw. wiederherzustellen, wird ein funktionaler Zusammenhang zwischen einzelnen Wartungsmaßnahmen und ihrem jeweiligen Potenzial zur Steigerung der Triebwerksleistung ermittelt. Art und Ausmaß bzw. Umfang einer spezifischen Wartungsmaßnahme am Triebwerk 10 im Rahmen der Triebwerkswartung werden durch einen zugeordneten Wartungsparameter X bzw. $\Delta X$ charakterisiert Je nach Wartungsmaßnahme kann der Wartungsparameter X bzw. $\Delta X$ die Änderung eines Merkmals wie zum Beispiel die Änderung eines Spitzenspalts, einer Oberflächenrauhigkeit, eines Vorderkantenradius oder einer Sehnenlänge einer Schaufel durch die Wartung charakterisieren. Weiterhin kann der Wartungsparameter X Maßnahmen zur Wiederherstellung von Merkmalen charakterisieren. Beispielsweise kann der Wartungsparameter X die Information charakterisieren, dass ein bestimmter Anteil (z. B. 50%) der Rotorschaufeln der 2. Stufe des Triebwerks 10 poliert wurden bzw. werden sollen. Ebenso kann die Zyklenzahl eines Bauteils seit der vorherigen Wartung zur Zustandsbeschreibung des Triebwerks 10 vor Beginn der Wartung zur Ermittlung des bzw. der Wartungsparameter X herangezogen werden.

Zur Ermittlung des funktionalen Zusammenhangs zwischen einem bestimmten Wartungsparameter X bzw. $\Delta X$ und dem

Anteil des Wartungsparameters X bzw. ΔX an einem Unterschied zwischen dem ersten Leistungsparameter $Y_{pre}$ und dem zweiten Leistungsparameter $Y_{post}$ können mathematische Funktionen herangezogen werden, die auf physikalischen Überlegungen basieren. Beispielsweise kann der funktionale Zusammenhang zwischen einer Spaltänderung ($\Delta X = \Delta s$) und einer daraus resultierenden Wirkungsgradänderung $\Delta\eta$ mit einer Konstanten $k_{Spalt}$ linear approximiert werden:

$$\Delta\eta = k_{Spalt} * \Delta s$$

Alternativ können je nach Wartungsmaßnahme auch komplexere funktionale Zusammenhänge gewählt werden. Ebenso kann vorgesehen sein, dass der funktionale Zusammenhang zwischen einer bestimmten Wartungsmaßnahme und ihrer Auswirkung auf die Turbinenleistung beispielsweise hypothesenfrei, als polynomiales Modell, als exponentielles Modell oder anhand eines stochastischen Modells ermittelt wird.

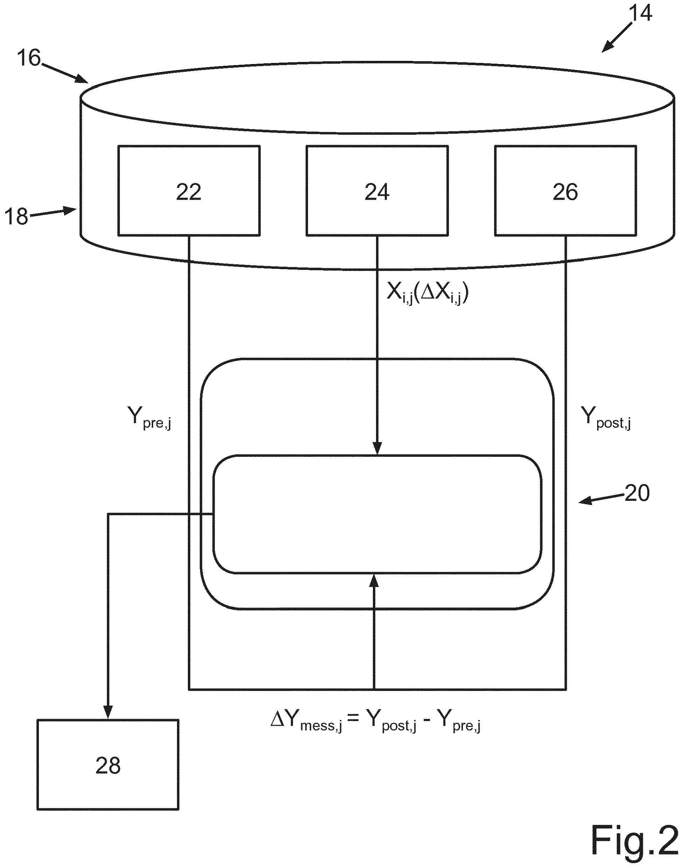

Fig. 2 zeigt zur weiteren Verdeutlichung ein beispielhaftes, nicht erfindungsgemäßes Ablaufdiagramm zum Ermitteln eines funktionalen Zusammenhangs zwischen unterschiedlichen Wartungsparametern $X_{i,j}$ und ihrem jeweiligen Anteil an einem Unterschied zwischen einer Triebwerksleistung vor und nach einer Triebwerkswartung. In Abhängigkeit der zugeordneten Wartungsmaßnahme kann der Wartungsparameter ein

Ausmaß einer bestimmten Wartungsmaßnahme charakterisieren und dementsprechend auch als $\Delta X_{i,j}$ bezeichnet werden.

Zunächst wird ein Triebwerkswartungssystem 14 bereitgestellt, welches ein Datenbanksystem 16 mit einer Datenbank 18 und einer Datenbankmanagementeinrichtung 20 umfasst. In Fig. 2 bezeichnet:

$Y_{pre}$:    Leistungsparameter vor Wartung
$Y_{post}$:    Leistungsparameter nach Wartung
X:    Wartungs-/Zustandsparameter
$a_i$:    Funktionsparameter
i:    laufender Index zur Beschreibung unterschiedlicher Wartungsmaßnahmen
j:    laufender Index für unterschiedliche Triebwerke in der Datenbank

Die Datenbank 18 enthält "On-Wing"- und/oder Prüfstands-Daten 22, die vor Durchführung der Wartung am Triebwerk 10 gemessen und zur Ermittlung des ersten Leistungsparameters $Y_{pre,j}$ für das vorliegende Triebwerk j verwendet werden. Weiterhin enthält die Datenbank 18 Daten 24, die den Wartungsumfang charakterisieren. Der Wartungsumfang kann gemäß der folgenden Formel durch den Grad der Wiederherstellung eines Merkmals bzw. eines Bauteils einer Stufe des Triebwerks 10 beschrieben werden.

$$\xi_{j,k} = \frac{\sum_m N_{j,k,m}}{N_{j,tot}}$$

Dabei bezeichnen:

$\xi$: Wartungsumfang
j: Triebwerksstufe
k: Merkmal/Bauteil
m: Wartungsmaßnahme (Reparatur/Austausch)
N: Anzahl der Teile

Zur Vereinfachung kann der Wartungsumfang gemäß der folgenden Formel für mehrere Triebwerksstufen eines Triebwerks 10 gemeinsam, d.h. als Cluster ermittelt werden:

$$\xi_k = \frac{\sum_{j=1}^{n} \xi_{j,k}}{n}.$$

Dabei bezeichnet n die Anzahl der Triebwerksstufen.

Mögliche Datenquellen zur Bestimmung des Wartungsumfangs sind beispielsweise Aufzeichnungen von früheren Wartungsumfangsplanungen, Aufzeichnungen der Ersatzteile, die im Rahmen früherer Wartungen benötigt wurden, Aufzeichnungen der Herstellungsdaten des Triebwerks 10 oder Daten von Modifikations-Tracking-Systemen. Weiterhin enthält die Datenbank 18 "On-Wing"- und/oder Prüfstands-Daten 26 des Triebwerks 10 nach Durchführung der Wartung, aus denen für das vorliegende Triebwerk j der zweite Leistungsparameter $Y_{post,j}$ ermittelt wird. Aus den Daten 24 werden bezogen auf das Triebwerk j für jede Wartungsmaßnahme entsprechende Wartungsparameter $X_{i,j}$ ($\Delta X_{i,j}$) ermittelt und mittels der Datenbankmanagementeinrichtung 20 dazu verwendet, einen funktionalen Zusammenhang

$$\Delta Y_{modell,j} = f(X_{i,j}, a_i)$$

zwischen den einzelnen Wartungsparametern $X_{i,j}$ ($\Delta X_{i,j}$) und dem Anteil jedes Wartungsparameters $X_{i,j}$ ($\Delta X_{i,j}$) an einer Differenz $\Delta Y_{modell,j}$ zwischen dem ersten Leistungsparameter $Y_{pre}$ und dem zweiten Leistungsparameter $Y_{post}$ zu ermitteln. Anschließend wird mittels der Datenbankmanagementeinrichtung 20 eine Ausgleichsrechnung durchgeführt, in welcher für das Triebwerk j eine Differenz $\Delta Y_{mess,j} = Y_{post,j} - Y_{pre,j}$ der Leistungsparameter $Y_{pre,j}$, $Y_{post,j}$ gebildet wird. Diese Differenz $\Delta Y_{mess,j}$ wird anschließend verwendet, um eine Ausgleichsrechnung durchzuführen, in welcher alle Koeffizienten $a_i$ des errechneten funktionalen Zusammenhangs $\Delta Y_{modell,j}$ derart optimiert werden, dass gilt:

$$\varepsilon = \sum_{j} \Delta Y_{mess,j} - \Delta Y_{mod\,ell,j} \overset{!}{\to} \min$$

Hierfür kann beispielsweise die Methode der kleinsten Quadrate verwendet werden. Das Ergebnis kann dann mittels einer Ausgabeeinrichtung 28 an ein Wartungspersonal ausgegeben und bei der Wartung zukünftiger Triebwerke 10 entsprechend berücksichtig werden.

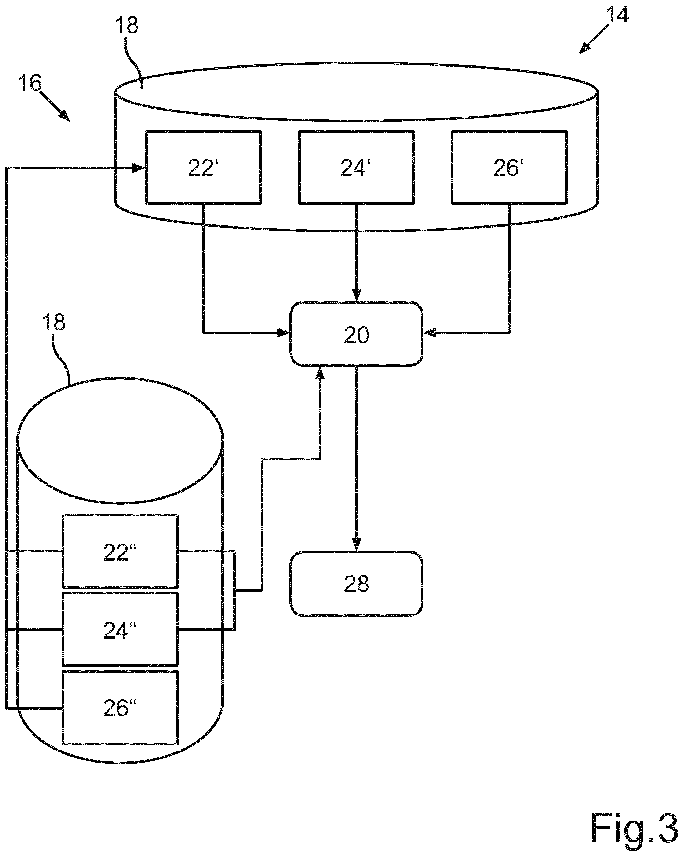

Fig. 3 zeigt ein alternatives Ablaufdiagramm zum Ermitteln eines funktionalen Zusammenhangs $\Delta Y_{modell}$ zwischen unterschiedlichen Wartungsparametern $X_{i,j}$ ($\Delta X_{i,j}$) und ihrem jeweiligen Anteil an einem Unterschied $\Delta Y_{mess,j}$ zwischen einer Triebwerksleistung vor und nach einer Wartung. Im Unterschied zum vorhergehenden Ausführungsbeispiel umfasst die Datenbank 18 vorstehend beschriebene Daten 22', 24', 26' aus vergangenen Wartungen desselben oder anderer Triebwerke 10. Zusätzlich umfasst die Datenbank 18 Daten 22", 24", 26", die anhand des aktuell zu wartenden Triebwerks 10 erhalten werden. Anhand der historischen Daten 22', 24', 26' und der aktuell ermittelten Daten 22" und 24" werden mit Hilfe der Datenbankmanagementeinrichtung 20 die Auswirkungen einzelner Wartungsmaßnahmen auf den zu erwartenden Gesamteffekt auf die Triebwerksleistung ermittelt und mittels der Ausgabeeinrichtung 28 an ein Wartungspersonal ausgegeben. Hierdurch kann eine gezielte Planung und Durchführung des Wartungsumfangs vorgenommen werden, da nur die effizientesten Wartungsmaßnahmen ausgewählt werden können, die beispielsweise unter Berücksichtigung der Kosten der einzelnen Wartungsmaßnahmen das beste Preis-Leistungs-Verhältnis zur Wiederherstellung einer Mindesttriebwerksleistung bieten. Alternativ oder zusätzlich können bei der Planung und Durchführung der Wartung weitere Aspekte wie beispielsweise die zu erwartende Zyklenzahl bestimmter Bauteile, die Sicherstellung einer Mindesttriebwerksleistung bis zu einem bestimmten Zeitpunkt und dergleichen berücksichtigt werden. Die vor der Wartung ermittelten Daten 22", 24" sowie die nach der Wartung ermittelten Daten 26" werden ebenfalls in der Datenbank 18 gespeichert, so dass die Datenbasis der Datenbank 18 kontinuierlich verbreitert und ein selbstlernendes Vorhersagemodell erhalten wird.

Wie bereits erwähnt, können zur Charakterisierung einzelner Wartungsmaßnahmen unterschiedliche mathematische Modelle zugrunde gelegt werden. So kann beispielsweise basierend auf Literatur-Daten ein mathematisches Modell der Verschlechterung eines Merkmals anhand der Formel

$$\Delta X_k = a_k * t^{1/\kappa_k}$$

beschrieben werden. Zusammen mit der folgenden Formel:

$$\Delta \eta_k = b_k * \Delta X_k$$

zur Beschreibung der Auswirkung dieses Merkmals auf den Wirkungsgrad des Triebwerks kann die folgende Formel:

$$\Delta \eta_k = \alpha_k / 10 * \xi_k * \max(t / 1000 - t0_k; 0)^{1/\kappa_k}$$

mit:

a: Koeffizient für die Verschlechterungsrate
$\kappa$: Koeffizient für den Verschlechterungsverlauf (qualitativ)
$\alpha$: Koeffizient für die Leistungsverlustrate
t0: Beginn der Leistungsabnahme (in Zyklen oder Flugstunden)

abgeleitet werden, anhand welcher vorhergesagt werden kann, ab welcher Zyklenzahl (t) ausgehend vom Basiswert bzw. Beginn der Leistungsabnahme (t0) eine Alterung bzw. Verschlechterung des Wirkungsgrads des Triebwerks aufgrund des betreffenden Merkmals/Bauteils zu erwarten ist. Durch Aufsummieren aller Merkmale für alle betrachteten Triebwerksstufen gemäß der Formel

$$\Delta \eta_{tot} = \sum_k \Delta \eta_k$$

kann der Gesamtwartungsbedarf des Triebwerks vorhergesagt und geplant werden. Tabelle 1 zeigt exemplarisch optimierte Korrelationsfaktoren zur Effizienz verschiedener Wartungsmaßnahmen an Bauteilen eines Hochdruckverdichters auf die resultierende Wirkungsgradverbesserung eines Triebwerks. Man erkennt, dass unterschiedliche Wartungsmaßnahmen unterschiedlich wirksam bei der Verbesserung des Wirkungsgrads sind.

Tabelle 1

| | Wiederherstellung von ... | | | | | | | |
| | Schaufelspalt durch Wartungsmaßnahme an Schaufelblattspitze(n) (tip clearance, blade tip) | | Schaufelspalt durch Wartungsmaßnahme an Gehäuseauskleidung (tip clearance, casing liner) | | Schaufelblattkontur (blade contour) | | Oberflächenrauhigkeit (surface roughness) | |
| | Vorne | Hinten | Vorne | Hinten | Vorne | Hinten | Vorne | Hinten |
|---|---|---|---|---|---|---|---|---|
| $\alpha$ | 0,53 | 0,27 | 0,03 | 0,34 | 0,58 | 0,09 | 1,00 | 0,38 |
| t0 | 0,30 | 0,70 | 0,30 | 0,08 | 0,27 | 0,68 | 0,19 | 0,41 |
| $\kappa$ | 5,62 | 5,84 | 7,63 | 7,33 | 6,10 | 5,21 | 6,17 | 6,62 |

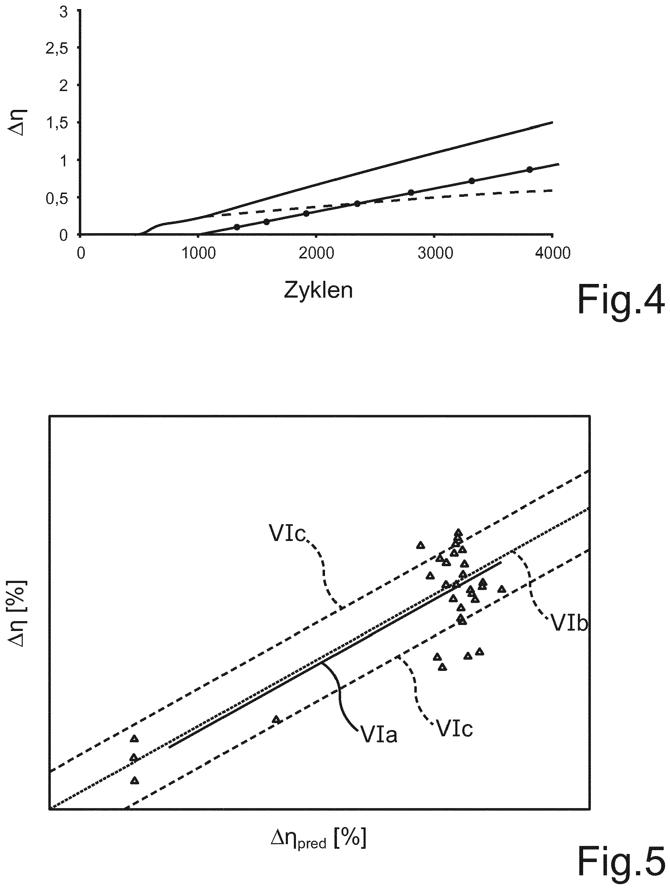

Fig. 4 zeigt ein Diagramm, in welchem in Abhängigkeit einer Zyklenzahl einer Schaufel der Triebwerks 10 das Potenzial zweier Wartungsmaßnahmen zur Verbesserung einer Triebwerksleistung gezeigt sind. Die Zyklenzahl der Schaufel ist dabei auf der Abszissenachse aufgetragen, während die Differenz der Triebwerksleistung vor und nach der Wartung auf der Ordinatenachse aufgetragen ist. Die strichpunktierte Linie beschreibt dabei die Auswirkung der Wartungsmaßnahme "Wiederherstellen des Schaufelspalts", während die gestrichelte Linie die Auswirkung der Wartungsmaßnahme "Wiederherstellen der gewünschten Oberflächenrauhigkeit" auf die Triebwerksleistung in Abhängigkeit der Zyklenzahl der Schaufel beschreibt. Die durchgezogene Linie zeigt das kombinierte Gesamtpotenzial beider Wartungsmaßnahmen. Man erkennt, dass die beiden Wartungsmaßnahmen in Abhängigkeit der Zyklenzahl unterschiedlich große Auswirkungen auf die Verbesserung der Triebwerksleistung aufweisen und dass die Wartungsmaßnahme "Wiederherstellen des Schaufelspalts" bei höheren Zyklenzahlen größere Auswirkungen auf den Wirkungsgrad besitzt als die Wartungsmaßnahme "Wiederherstellen der gewünschten Oberflächenrauhigkeit".

Fig. 5 zeigt ein Diagramm, in dem auf der Ordinate gemessene Wirkungsgradänderungen $\Delta\eta$ gewarteter Triebwerke in Prozent und auf der Abszisse die anhand jeweils ermittelter funktionaler Zusammenhänge einzelner Wartungsmaßnahmen errechnete Wirkungsgradänderungen $\Delta\eta_{pred}$ gewarteter Triebwerke in Prozent aufgetragen sind. Die durchgezogene Linie VIa zeigt dabei einen Fit mit einem linearen Zusammenhang der als Dreiecke dargestellten Datenpunkte. Die punktierte Linie VIb zeigt den Zusammenhang als lineares Trendmodell, während die gestrichelten Linien VIc das Konfidenzintervall für die Analyse der Leistungsparameter (95% Wahrscheinlichkeit) eingrenzen. Man erkennt die hohe Vorhersagekraft der ermittelten funktionalen Zusammenhänge.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Durchführen einer Wartung eines Triebwerks (10), umfassend die Schritte:

   - Bereitstellen eines Triebwerkswartungssystems (14), welches ein Datenbanksystem (16) mit einer Datenbank (18) und einer Datenbankmanagementeinrichtung (20) umfasst;
   - Bereitstellen wenigstens eines in der Datenbank (18) gespeicherten ersten Leistungsparameters ($Y_{pre}$), der eine Triebwerksleistung vor einer Triebwerkswartung charakterisiert;
   - Bereitstellen wenigstens eines in der Datenbank (18) gespeicherten Wartungsparameters (X), der ein Ausmaß einer Wartungsmaßnahme an einem Triebwerk (10) im Rahmen einer Triebwerkswartung charakterisiert;
   - Bereitstellen wenigstens eines in der Datenbank (18) gespeicherten zweiten Leistungsparameters ($Y_{post}$), der die Triebwerksleistung nach der Triebwerkswartung charakterisiert;

   **gekennzeichnet durch** die Schritte:

   - Ermitteln eines funktionalen Zusammenhangs ($\Delta Y_{modell}$) zwischen unterschiedlichen Wartungsparametern ($X_{i,j}$) und dem Anteil der unterschiedlichen Wartungsparameter ($X_{i,j}$) an einem Unterschied ($\Delta Y_{mess,j}$) zwischen dem ersten Leistungsparameter ($Y_{pre}$) und dem zweiten Leistungsparameter ($Y_{post}$) mittels der Datenbankmanagementeinrichtung (20), wobei die Datenbank (18) Daten (22', 24', 26') aus vergangenen Wartungen von Triebwerken (10) und Daten (22", 24", 26") umfasst, die anhand des aktuell zu wartenden Triebwerks (10) erhalten werden, wobei:

     - die Daten (22', 22") "On-Wing"- und/ oder Prüfstands-Daten enthalten, die vor Durchführung der Wartung am Triebwerk (10) gemessen werden, und zur Ermittlung des ersten Leistungsparameters ($Y_{pre}$) verwendet werden;
     - die Daten (24', 24") den Wartungsumfang charakterisieren und zur Ermittlung der Wartungsparameter ($X_{i,j}$) für jede Wartungsmaßnahme verwendet werden und
     - die Daten (26', 26") "On-Wing"- und/oder Prüfstands-Daten enthalten, die nach der Durchführung der Wartung am Triebwerk (10) gemessen werden und zur Ermittlung des zweiten Leistungsparameter ($Y_{post}$) verwendet werden;

     - Ermitteln der Auswirkungen einzelner Wartungsmaßnahmen auf den zu erwartenden Gesamteffekt auf die Triebwerksleistung anhand der Daten (22', 24', 26') früherer Wartungen und der aktuell am Triebwerk (10) ermittelten Daten (22", 24") mit Hilfe der Datenbankmanagementeinrichtung (20);

- Ausgeben des funktionalen Zusammenhangs mittels des Triebwerkswartungssystems (14); und
- Durchführen der Wartung des Triebwerks (10) unter Berücksichtigung des funktionalen Zusammenhangs.

**2.** Verfahren nach Anspruch 1,
**dadurch gekennzeichnet, dass**
der erste Leistungsparameter ($Y_{pre}$) und/oder der zweite Leistungsparameter ($Y_{post}$) mittels eines Überwachungssystems (12) des Triebwerks (10) und/oder mittels eines Leistungsprüfstands ermittelt und in der Datenbank (18) gespeichert wird.

**3.** Verfahren nach Anspruch 1 oder 2,
**dadurch gekennzeichnet, dass**
der erste Leistungsparameter ($Y_{pre}$) und/oder der zweite Leistungsparameter ($Y_{post}$) unter Berücksichtigung wenigstens eines Parameters aus der Gruppe Höhe, Druck, Temperatur, Drehzahl, Brennstoffmassenstrom, Flugmachzahl, Luftmassenstrom, Wirkungsgrad, Kapazität, Ventilstellung, Leitschaufelwinkel, Spalthaltungsstellung und Schwingungen im Turbinenbereich des Triebwerks (10) und/oder in einem Verdichter des Triebwerks (10) ermittelt werden.

**4.** Verfahren nach einem der Ansprüche 1 bis 3,
**dadurch gekennzeichnet, dass**
der wenigstens eine Wartungsparameter (X) ein Ausmaß einer Änderung ($\Delta X$) eines Merkmals eines Bauteils des Triebwerks (10) durch die Wartungsmaßnahme charakterisiert und/oder ein Ausmaß ($\Delta X$) einer Wiederherstellung eines Merkmals eines Bauteils des Triebwerks (10) durch die Wartungsmaßnahme charakterisiert und/oder unter Berücksichtigung einer Zyklenzahl eines zu wartenden Bauteils des Triebwerks (10) seit einer früheren Wartung des Triebwerks (10) ermittelt wird.

**5.** Verfahren nach einem der Ansprüche 1 bis 4,
**dadurch gekennzeichnet, dass**
der erste Leistungsparameter ($Y_{pre}$) und/oder der zweite Leistungsparameter ($Y_{post}$) und/oder der Wartungsparameter (X) als in der Datenbank (18) gespeicherte Daten eines bereits gewarteten Triebwerks (10) vorliegen und/oder am zu wartenden Triebwerk (10) ermittelt und in der Datenbank (18) gespeichert werden.

**6.** Verfahren nach einem der Ansprüche 1 bis 5,
**dadurch gekennzeichnet, dass**
der erste Leistungsparameter ($Y_{pre}$) und/oder der zweite Leistungsparameter ($Y_{post}$) und/oder der Wartungsparameter (X) bezogen auf einen Typ und/oder ein Exemplar und/oder eine Stufe und/oder ein Stufencluster des Triebwerks (10) bereitgestellt werden.

**7.** Verfahren nach einem der Ansprüche 1 bis 6,
**dadurch gekennzeichnet, dass**
der funktionale Zusammenhang durch eine Ausgleichsrechnung ermittelt wird.

**8.** Verfahren nach einem der Ansprüche 1 bis 7,
**dadurch gekennzeichnet, dass**
der funktionale Zusammenhang für eine Vielzahl von Wartungsparametern (X) ermittelt wird.

**9.** Triebwerkswartungssystem (14) zur Verwendung in einem Verfahren nach einem der Ansprüche 1 bis 8, umfassend:

- ein Datenbanksystem (16) mit:

    - einer Datenbank (18), welche ausgebildet ist, wenigstens einen ersten Leistungsparameter ($Y_{pre}$), der eine Triebwerksleistung vor einer Triebwerkswartung charakterisiert, wenigstens einen Wartungsparameter (X), der ein Ausmaß einer Wartungsmaßnahme an einem Triebwerk (10) im Rahmen einer Triebwerksüberholung charakterisiert, und wenigstens einen zweiten Leistungsparameter ($Y_{post}$), der die Triebwerksleistung nach der Triebwerkswartung charakterisiert, zu speichern; und

    - einer Datenbankmanagementeinrichtung (20), welche ausgebildet ist, auf die Datenbank (18) zuzugreifen und einen funktionalen Zusammenhang ($\Delta Y_{modell}$) zwischen unterschiedlichen Wartungsparametern ($X_{i,j}$) und dem Anteil der unterschiedlichen Wartungsparameter ($X_{i,j}$) am Unterschied ($\Delta Y_{mess,j}$) zwischen dem ersten Leis-

tungsparameter ($Y_{pre}$) und dem zweiten Leistungsparameter ($Y_{post}$) zu ermitteln, wobei die Datenbank (18) Daten (22', 24', 26') aus vergangenen Wartungen von Triebwerken (10) und Daten (22", 24", 26") umfasst, die anhand des aktuell zu wartenden Triebwerks (10) erhalten werden, wobei:

- die Daten (22', 22") "On-Wing"- und/ oder Prüfstands-Daten enthalten, die vor Durchführung der Wartung am Triebwerk (10) gemessen werden und zur Ermittlung des ersten Leistungsparameters ($Y_{pre}$) verwendet werden;,
- die Daten (24', 24") den Wartungsumfang charakterisieren und zur Ermittlung der Wartungsparameter ($X_{i,j}$) für jede Wartungsmaßnahme verwendet werden und
- die Daten (26', 26") "On-Wing"- und/oder Prüfstands-Daten enthalten, die nach der Durchführung der Wartung am Triebwerk (10) gemessen werden und zur Ermittlung des zweiten Leistungsparameters ($Y_{post}$) verwendet werden, und

die Auswirkungen einzelner Wartungsmaßnahmen auf den zu erwartenden Gesamteffekt auf die Triebwerksleistung anhand der Daten (22', 24', 26') früherer Wartungen und der aktuell am Triebwerk (10) ermittelten Daten (22", 24") ermittelt werden; sowie
- eine Ausgabeeinrichtung (28) zum Ausgeben des mittels der Datenbankmanagementeinrichtung (20) ermittelten funktionalen Zusammenhangs zur Berücksichtigung bei der Wartung des Triebwerks (10).

## Claims

1. Method for performing maintenance on an engine (10), comprising the steps of:

   - providing an engine maintenance system (14), which comprises a database system (16) having a database (18) and a database management device (20);
   - providing at least one first performance parameter ($Y_{pre}$) stored in the database (18), which characterizes the engine performance before an engine maintenance procedure;
   - providing at least one maintenance parameter (X) stored in the database (18), which characterizes the scope of a maintenance measure performed on an engine (10) within the context of an engine maintenance procedure;
   - providing at least one second performance parameter ($Y_{post}$) stored in the database (18), which characterizes the engine performance after the engine maintenance procedure; **characterized by** the steps of:
   - detecting a functional relationship ($\Delta Y_{modell}$) between different maintenance parameters ($X_{i,j}$) and the contribution of the different maintenance parameters ($X_{i,j}$) to a difference ($\Delta Y_{mess,j}$) between the first performance parameter ($Y_{pre}$) and the second performance parameter ($Y_{post}$) by means of the database management device (20), the database (18) comprising data (22', 24', 26') from past maintenance procedures on engines (10) and comprising data (22", 24", 26") that is obtained on the basis of the engine (10) currently to undergo maintenance, where:

      - the data (22', 22") contain "on-wing" and/or testing station data which are measured before maintenance is performed on the engine (10) and are used for detecting the first performance parameter ($Y_{pre}$);
      - the data (24', 24") characterize the scope of maintenance and are used for detecting the maintenance parameters ($X_{i,j}$) for each maintenance measure, and
      - the data (26', 26") contain "on-wing" and/or testing station data which are measured after maintenance is performed on the engine (10) and are used for detecting the second performance parameter ($Y_{post}$);

   - detecting the impact of individual maintenance measures on the total effect expected on the engine performance on the basis of the data (22', 24', 26') from previous maintenance procedures and the data (22", 24") currently detected at the engine (10) by means of the database management device (20);
   - outputting the functional relationship by means of the engine maintenance system (14); and
   - performing maintenance on the engine (10), taking into account the functional relationship.

2. Method according to claim 1, **characterized in that** the first performance parameter ($Y_{pre}$) and/or the second performance parameter ($Y_{post}$) are detected by means of a monitoring system (12) of the engine (10) and/or by means of a performance testing station and are stored in the database (18).

3. Method according to either claim 1 or claim 2, **characterized in that** the first performance parameter ($Y_{pre}$) and/or the second performance parameter ($Y_{post}$) are detected, taking into account at least one parameter from the group of height, pressure, temperature, speed, fuel mass flow rate, flight Mach number, air mass flow rate, efficiency, capacity, valve position, guide vane angle, clearance maintenance position, and vibrations in the turbine region of the engine (10) and/or in a compressor of the engine (10).

4. Method according to any of claims 1 to 3, **characterized in that** the at least one maintenance parameter (X) characterizes the scope of a modification ($\Delta$X) to a feature of a component of the engine (10) by means of the maintenance measure and/or characterizes the scope ($\Delta$X) of restoration of a feature of a component of the engine (10) by means of the maintenance measure and/or is detected taking into account a number of cycles of a component to undergo maintenance of the engine (10) since a previous maintenance procedure on the engine (10).

5. Method according to any of claims 1 to 4, **characterized in that** the first performance parameter ($Y_{pre}$) and/or the second performance parameter ($Y_{post}$) and/or the maintenance parameter (X) are present as data of an engine (10) which has already undergone maintenance that are stored in the database (18) and/or are detected at the engine (10) to undergo maintenance and are stored in the database (18).

6. Method according to any of claims 1 to 5, **characterized in that** the first performance parameter ($Y_{pre}$) and/or the second performance parameter ($Y_{post}$) and/or the maintenance parameter (X) are provided in relation to a type and/or a specimen and/or a stage and/or a stage cluster of the engine (10).

7. Method according to any of claims 1 to 6, **characterized in that** the functional relationship is detected by an adjustment calculation.

8. Method according to any of claims 1 to 7, **characterized in that** the functional relationship is detected for a plurality of maintenance parameters (X).

9. Engine maintenance system (14) for use in a method according to any of claims 1 to 8, comprising:

 - a database system (16) having:

  - a database (18), which is designed to store at least one first performance parameter ($Y_{pre}$) characterizing the engine performance before an engine maintenance procedure, at least one maintenance parameter (X) characterizing the scope of a maintenance measure performed on an engine (10) in the context of an engine overhaul, and at least one second performance parameter ($Y_{post}$) characterizing the engine performance after the engine maintenance procedure; and

  - a database management device (20), which is designed to access the database (18) and to detect a functional relationship ($\Delta Y_{modell}$) between different maintenance parameters ($X_{i,j}$) and the contribution of the different maintenance parameters ($X_{i,j}$) to the difference ($\Delta Y_{mess,j}$) between the first performance parameter ($Y_{pre}$) and the second performance parameter ($Y_{post}$), wherein the database (18) comprises data (22', 24', 26') from past maintenance procedures on engines (10) and data (22", 24", 26") that are obtained on the basis of the engine (10) currently to undergo maintenance, wherein:

   - the data (22', 22') contain "on-wing" and/or testing station data which are measured before maintenance is performed on the engine (10) and are used for detecting the first performance parameter ($Y_{pre}$);
   - the data (24', 24") characterize the scope of maintenance and are used for detecting the maintenance parameters ($X_{i,j}$) for each maintenance measure, and
   - the data (26', 26") contain "on-wing" and/or testing station data which are measured after maintenance is performed on the engine (10) and are used for detecting the second performance parameter ($Y_{post}$), and the impact of individual maintenance measures on the total effect expected on the engine performance is detected on the basis of the data (22', 24', 26') from previous maintenance procedures and the data (22", 24") currently detected at the engine (10); and

  - an output device (28) for outputting the functional relationship, detected by means of the database management device (20), in order for said relationship to be taken into account during a maintenance procedure on the engine (10).

**Revendications**

1. Procédé de réalisation de la maintenance d'une turbine (10), comprenant les étapes consistant à :

   - fournir un système de maintenance de turbine (14), qui comprend un système de base de données (16) comportant une base de données (18) et un dispositif de gestion de base de données (20) ;
   - fournir au moins un premier paramètre de performance ($Y_{pre}$) enregistré dans la base de données (18) qui caractérise une performance de turbine avant la maintenance de la turbine ;
   - fournir au moins un paramètre de maintenance (X) enregistré dans la base de données (18), qui caractérise l'ampleur d'une opération de maintenance sur une turbine (10) dans le cadre d'une maintenance de turbine ;
   - fournir au moins un second paramètre de performance ($Y_{post}$) enregistré dans la base de données (18), qui caractérise la performance de la turbine après la maintenance de la turbine ; **caractérisé par** les étapes :
   - de détermination d'une relation fonctionnelle ($\Delta Y_{modell}$) entre différents paramètres de maintenance ($X_{i,j}$) et la proportion des différents paramètres de maintenance ($X_{i,j}$) sur une différence ($\Delta Y_{mess,j}$) entre le premier paramètre de performance ($Y_{pre}$) et le second paramètre de performance ($Y_{post}$) au moyen du dispositif de gestion de base de données (20), la base de données (18) comprenant des données (22', 24', 26') provenant de maintenances passées de turbines (10) et des données (22", 24", 26") qui ont été obtenues à partir de la turbine (10) devant actuellement faire l'objet d'une maintenance, dans lequel :

      - les données (22', 22") contiennent des données « On-Wing » et/ou des données de banc d'essai qui ont été mesurées avant la réalisation de la maintenance sur la turbine (10) et qui sont utilisées pour déterminer le premier paramètre de performance ($Y_{pre}$) ;
      - les données (24', 24") caractérisent l'ampleur de la maintenance et sont utilisées pour déterminer les paramètres de maintenance ($X_{i,j}$) pour chaque opération de maintenance, et
      - les données (26', 26") contiennent des données « On-Wing » et/ou des données de banc d'essai, qui ont été mesurées après la réalisation de la maintenance sur la turbine (10) et qui sont utilisées pour déterminer le second paramètre de performance ($Y_{post}$) ;

      - de détermination des conséquences des différentes opérations de maintenance sur les conséquences globales attendues sur la performance de la turbine sur la base des données (22', 24', 26') des maintenances précédentes et des données (22", 24") actuellement déterminées sur la turbine (10) à l'aide du dispositif de gestion de base de données (20) ;
      - d'édition de la relation fonctionnelle au moyen du système de maintenance de la turbine (14) ; et
      - de réalisation de la maintenance de la turbine (10) en tenant compte de la relation fonctionnelle.

2. Procédé selon la revendication 1, **caractérisé en ce que** le premier paramètre de performance ($Y_{pre}$) et/ou le second paramètre de performance ($Y_{post}$) est déterminé au moyen d'un système de surveillance (12) de la turbine (10) et/ou au moyen d'un banc dynamométrique, et est enregistré dans la base de données (18).

3. Procédé selon la revendication 1 ou 2, **caractérisé en ce que** le premier paramètre de performance ($Y_{pre}$) et/ou le second paramètre de performance ($Y_{post}$) sont déterminés en prenant en compte au moins un paramètre du groupe comprenant la hauteur, la pression, la température, le nombre de tours, le débit massique de carburant, le nombre de Mach en vol, le débit massique d'air, le rendement, la capacité, la position de la vanne, l'angle de la pale directrice, la position de maintien de l'intervalle et les vibrations dans la zone de turbine de la turbine (10) et/ou dans un compresseur de la turbine (10).

4. Procédé selon l'une des revendications 1 à 3, **caractérisé en ce que** l'au moins un paramètre de maintenance (X) caractérise une ampleur d'une modification ($\Delta X$) d'une caractéristique d'un composant de la turbine (10) par l'opération de maintenance et/ou caractérise une ampleur ($\Delta X$) d'une restauration d'une caractéristique d'un composant de la turbine (10) par l'opération de maintenance et/ou est déterminé en tenant compte d'un nombre de cycles d'un composant de la turbine (10) devant faire l'objet d'une maintenance depuis une maintenance précédente de la turbine (10).

5. Procédé selon l'une des revendications 1 à 4, **caractérisé en ce que** le premier paramètre de performance ($Y_{pre}$) et/ou le second paramètre de performance ($Y_{post}$) et/ou le paramètre de maintenance (X) se présentent comme des données d'une turbine (10) ayant déjà fait l'objet d'une maintenance, enregistrées dans la base de données (18), et/ou sont déterminées sur la turbine (10) devant faire l'objet d'une maintenance, et sont enregistrées dans la base de données (18).

6. Procédé selon l'une des revendications 1 à 5, **caractérisé en ce que** le premier paramètre de performance ($Y_{pre}$) et/ou le second paramètre de performance ($Y_{post}$) et/ou le paramètre de maintenance (X) sont fournis par rapport à un type et/ou un exemplaire et/ou un niveau et/ou un groupe de niveaux de la turbine (10).

7. Procédé selon l'une des revendications 1 à 6, **caractérisé en ce que** la relation fonctionnelle est déterminée par un ajustement de courbe.

8. Procédé selon l'une des revendications 1 à 7, **caractérisé en ce que** la relation fonctionnelle est déterminée pour une pluralité de paramètres de maintenance (X).

9. Système de maintenance de turbine (14) destiné à être utilisé dans un procédé selon l'une des revendications 1 à 8, comprenant :

   - un système de base de données (16) comportant :

      - une base de données (18) conçue pour enregistrer au moins un premier paramètre de performance ($Y_{pre}$) caractérisant une performance de la turbine avant la maintenance de la turbine, au moins un paramètre de maintenance (X) caractérisant l'ampleur d'une opération de maintenance d'une turbine (10) dans le cadre d'une révision de la turbine, et au moins un second paramètre de performance ($Y_{post}$) caractérisant la performance de la turbine après la maintenance de la turbine ; et

      - un dispositif de gestion de base de données (20) qui est conçu pour accéder à la base de données (18) et pour déterminer une relation fonctionnelle ($\Delta Y_{modell}$) entre différents paramètres de maintenance ($X_{i,j}$) et la proportion des différents paramètres de maintenance ($X_{i,j}$) sur la différence ($\Delta Y_{mess,j}$) entre le premier paramètre de performance ($Y_{pre}$) et le second paramètre de performance ($Y_{post}$), la base de données (18) comprenant des données (22', 24', 26') provenant des maintenances passée de turbines (10) et des données (22",24",26") obtenues à partir de la turbine (10) devant actuellement faire l'objet d'une maintenance, dans lequel :

         - les données (22', 22") contiennent des données « On-Wing » et/ou des données de banc d'essai qui ont été mesurées avant la réalisation de la maintenance sur la turbine (10) et qui sont utilisées pour déterminer le premier paramètre de performance ($Y_{pre}$) ;
         - les données (24', 24") caractérisent l'ampleur de la maintenance et sont utilisées pour déterminer les paramètres de maintenance ($X_{i,j}$) pour chaque opération de maintenance, et
         - les données (26', 26") contiennent des données « On-Wing » et/ou des données de banc d'essai, qui sont mesurées après la réalisation de la maintenance sur la turbine (10) et qui sont utilisées pour déterminer le second paramètre de performance ($Y_{post}$), et
         les conséquences des différentes opérations de maintenance sur les conséquences globales attendues sur la performance de la turbine sont déterminées sur la base des données (22', 24', 26') des maintenances précédentes et des données (22", 24") actuellement déterminées sur la turbine (10) ; ainsi que

      - un dispositif d'édition (28) pour éditer la relation fonctionnelle déterminée au moyen du dispositif de gestion de base de données (20) à prendre en compte lors de la maintenance de la turbine (10).

PALT
TAT
MN

12

P₂
T₂

N₁

P₂₅,
T₂₅

VGV

PS₃,
T₃

N₂ VIB

EGT  P₄₉

10

N₁ VIB  P₁₂₅  VBV  N₂  ECBV  W_F,
(T_F)

HPT ACC  LPT ACC

T_OIL
P_OIL

Fig.1

$$X_{i,j}(\Delta X_{i,j})$$

$$Y_{pre,j}$$

$$Y_{post,j}$$

$$\Delta Y_{mess,j} = Y_{post,j} - Y_{pre,j}$$

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1914010 A2